(19) Europäisches Patentamt
European Patent Office
Office européen des brevets

(11) **EP 2 744 254 A1**

(12) **EUROPEAN PATENT APPLICATION**
published in accordance with Art. 153(4) EPC

(43) Date of publication:
**18.06.2014 Bulletin 2014/25**

(21) Application number: **12823735.1**

(22) Date of filing: **25.07.2012**

(51) Int Cl.:
*H04W 16/02* (2009.01)   *H04B 1/12* (2006.01)
*H04B 7/005* (2006.01)   *H04B 7/14* (2006.01)

(86) International application number:
**PCT/CN2012/079152**

(87) International publication number:
**WO 2013/023517 (21.02.2013 Gazette 2013/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2011   CN 201110230920**
      **29.02.2012   CN 201210049969**

(71) Applicant: **Hitachi, Ltd.**
**Tokyo 100-8280 (JP)**

(72) Inventors:
• **GENG, Lu**
  **Beijing 100190 (CN)**
• **ZHENG, Meng**
  **Beijing 100190 (CN)**
• **YOSHIUCHI, Hideya**
  **Tokyo 100-8280 (JP)**

(74) Representative: **MERH-IP**
**Matias Erny Reichl Hoffmann**
**Paul-Heyse-Strasse 29**
**80336 München (DE)**

(54) **BASE STATION AND CONTROL METHOD THEREOF**

(57)    A base station and control method thereof for wireless communication network is provided. The base station comprises: transceiver unit for transmitting and receiving of data with communication nodes and terminals; location information storage unit for storing location information of the terminal in the wireless communication network; range expanding condition information storage unit for storing range expanding condition information of respective communication node which each terminal corresponding to; and control unit for determining a service strategy for the terminals based at least on the location information of the terminal in the wireless communication network and the range expanding condition information of respective communication node which each terminal corresponding to. It is expected to give full play to advantages of eICIC and CoMP for the real channel state of different terminals, achieve combination or conversion between them, so as to optimize the overall network design.

F I G. 5

EP 2 744 254 A1

**Description**

CLAIM OF PRIORITY

The present application claims priority from China application 201110230920.9 filed on August 12, 2011 and China application 201210049969.9 filed on February 29, 2012, the content of which is hereby incorporated by reference into this application.

TECHINICAL FIELD

The present disclosure relates generally to a device and method for providing service in a mobile communication network. More specifically, the present disclosure relates to the communication controlling server, base station and terminal in a multi-base station joint service system. The mobile communication network mentioned herein is a mobile communication system that supports multi-base station joint service.

BACKGROUND ART

As the mobile users increasing and the higher demanded for data rate, the conventional cellular network cannot meet the needs of customers increasingly. The 3rd-Generation Partnership Project (3GPP) is an international standard organization that has developed the system architectures and standards of the 2nd-Generation and 3rd-Generation mobile communication network. These standards have been applied to the networks on which air-interface has been deployed. Currently, 3GPP is launching on specifying the improved release of Long-Term Evolution (LTE) and LTE-Advanced that oriented to 4th mobile communication network, which the purpose thereof is for increasing the spectrum utilization (throughput / bandwidth), especially the spectrum utilization in the cell edge.

The general consideration for conventional cellular networks is the case of cellular homogeneous network. The coverage of each base station may be consider as a cellular, since the base stations use the same transmit power, the size of these cellular are the same. Thus, this constitutes a "homogeneous" network that distributes regularly. However, in the real network, in order to further improve the coverage and capacity of the network, the operator generally adds some unconventional nodes in the hotspot area of the macro base station's coverage. Such nodes may include "pico base station" (pico eNB), "home base station" (home eNB), relay and so on. There is not wired connection between such nodes and the conventional base station, instead relying on wireless transmission. As the presence of such nodes, there are multiple coverages in the network, the scopes of each coverage are also irregular, called "heterogeneous network."

In the heterogeneous network, since the macro base stations and pico base stations use co-channel transmission (i.e., transmit using the same time-frequency recourse), the users in the pico cell edge may suffer very strong interference from the macro base station. In the LTE and its evolved release LTE-A, it is introduced some effective interference mitigation methods, by which the spectrum utilization of the system can be improved greatly.

For simplicity, the present disclosure will use the abbreviation in the detail descriptions.

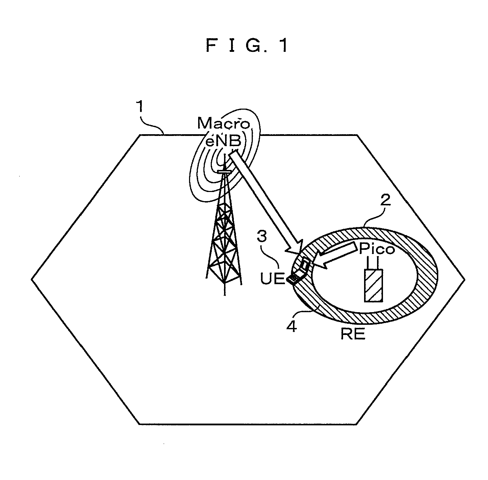

Fig. 1 is a typical heterogeneous network services scene of eICIC based interference cancellation mechanism. This mechanism is known as enhanced Inter-cell interference coordination. The coverage of Macro eNB 1 is known as macro cell. The coverage of Pico 2 (Pico eNB) is known as pico cell. The gain of cell splitting may be obtained by extending the coverage of the pico cell, and thus achieving a great improvement in spectrum utilization of the cell. This method of extending the coverage of cell is known as "Range Expansion". This method comprises adding an offset value when a user (hereinafter replaced by User Equipment (UE)) performs cell attachment, and selecting a macro cell as serving cell only if the signal of the macro cell is stronger than a pico cell more than the offset value. Otherwise, though the signal of pico cell is weaker than the macro cell, the pico cell will be selected as serving cell. This will result that UE 3 at the edge may suffer very strong co-channel interference from the macro cell. The general solution is performing resource partitioning in time domain. The macro cell adopts a particular resource format including ABS (almost blank subframe) and normal frame. The UE in the pico cell edge may be scheduled only when the macro cell transmitting ABS, and thus may be protect against the interference from the macro cell and gets performance improved.

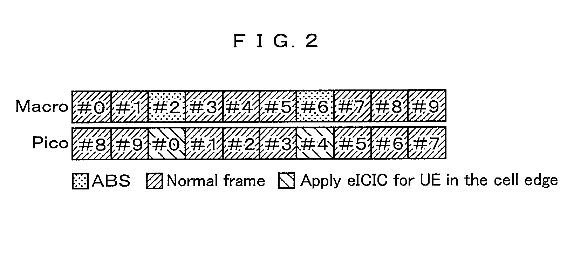

Fig. 2 is an example of frame resource assignment based on the scene in Fig. 1. In this example, the macro cell may configure ABS in subframe 2 and subframe 6. At this time, the macro cell keeps silent state on the resource elements of non-reference signal, i.e., not transmitting any data signal. Thus, for the UEs in the pico cell, the signals at the position corresponding to these two subframes may suffer less interference, and obtains grater signal to noise ratio. Under the base of the pico cell using subframe offset in order to avoid inter-cell broadcast information collision, the pico cell may transmit data to the UE in the edge thereof on the subframe numbered subframe 0 and subframe 4. The macro cell may perform normal data transmission for the UE within its own cell. This may result stronger interference with the UE in the pico cell, so that the pico cell may only adapt to schedule the UE in the vicinity of the center of its own cell where the signal to noise ratio is higher.

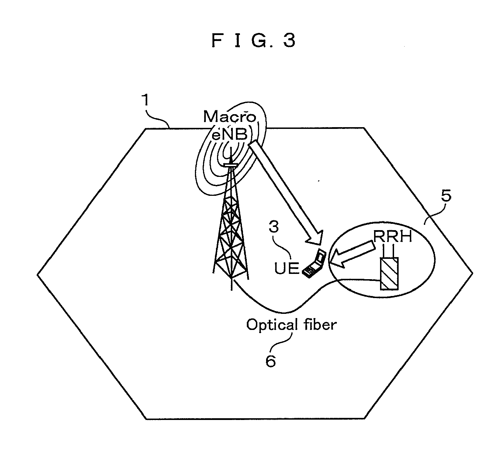

Fig. 3 is a typical heterogeneous network services scene of CoMP based interference cancellation mechanism. The macro cell 1 is connected to Remote Radio Head (RRH) 3 via optical fiber. (For simplicity, Remote Radio Head will be collectively represented as RRH hereinafter.) RRH is used for providing service to hotspot area and providing pico cell coverage. Since there is supporting for high capacity and low delay interface, the complex range of inter-cell cooperative information may be exchange rapidly among nodes, so that the implementation of CoMP is possible. CoMP (Coordinated Multipoint Transmission/Reception) is the so-called multipoint cooperative transmission. The multipoint cooperative transmission may perform beamforming based on distance from the terminal to the positions of the respective points. This can eliminate the inter-cell interference, and even can transform the inter-cell interference into useful signal, thus greatly enhancing the performance of UEs in the cell edge.

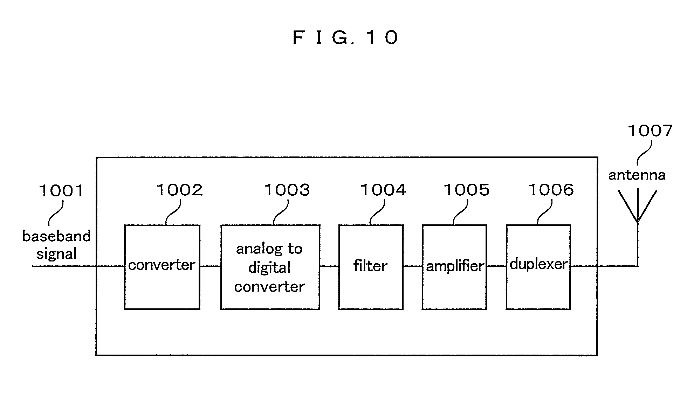

Fig. 10 is an internal structure diagram of RRH. 1001: baseband signal transmitted from base station via optical fiber. 1002: converter, for performing Spectrum shifting procedure to signals. Downward: transforming a baseband signal into frequency band signal by frequency conversion; upward: transforming a frequency band signal into baseband signal by frequency conversion. 1003: analog - digital converter, downward: converting a digital signal to an analog signal; upward: converting an analog signal to a digital signal. 1004: filter, for filtering out some frequency component from signals to suppress and prevent interference. 1005: amplifier, for amplifying the signal power to meet the needs of transmit power. 1006: duplexer, for isolating the transmitted and received signals to ensure both of them work well. 1007: antenna, for transmitting and receiving wireless signals.

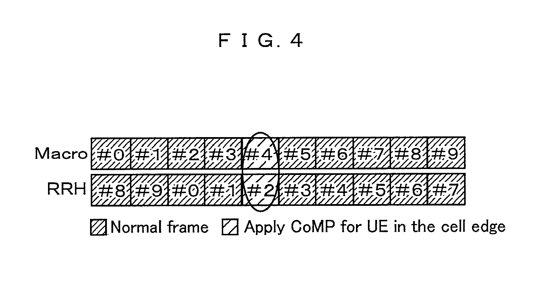

Fig. 4 is an example of frame resource assignment based on the scene in Fig. 3. In this example, the macro cell may perform coordination with the pico cell on subframe4 for providing service to UEs in the pico cell edge. At the same time, the macro cell may perform beamforming to the transmitted signals base on the schedule information to eliminate the interference with the target UEs in the pico cell; alternative, transmit signals to the target UEs simultaneously with the pico cell, so that the target UEs obtain a higher signal to noise ratio. The coordination between macro cell and pico cell may need information exchanging between them and unified adjustment. For the other frames, both sides provide service to the other UEs in the respective own cell. Because the signal to noise ratio of UE in the edge is lower, adusting these UEs for transmission of data in the non-coordinate frames may be unsuitable.

In the prior art, the methods relation to use eICIC and CoMP to achieving interference suppression in heterogeneous network and thus improve performance has been proposed many times.

The 3GPP proposal R1-105710 introduced why using Range Expansion technology in heterogeneous network and how to avoid the issue that the transport points interference with each other in the heterogeneous network employing Range Expansion technology by utilizing eICIC technology.

The 3GPP proposal R1-105724 proposed the detail introduction of eICIC and related technology, for example, the design of the macro cell ABS frame assignment pattern and the determination of the monitoring set of UEs in the pico cell edge. The design of the macro cell ABS frame assignment pattern needs to protect the data transmission of UEs in the pico cell edge while supports broadcasting of macro cell system information, meanwhile needs to meet the requirements of protection for the feedback information of UEs in the pico cell edge. Since eICIC belongs to multiplexing in the time domain, there is a need for adjusting the opportunity of performing channel monitoring to a particular UE so as to ensure the accuracy of the monitoring results.

The 3GPP proposal R1-111722 proposed specific results of CoMP simulation scene presented by 3GPP, and also proposed a method for determining a monitoring set and coordination set of CoMP. The results presented in the documents shows that Joint Processing CoMP, relative to eICIC, can provide a better system throughput and UE throughput in the cell edge.

In the above proposals and inventions, most of the focus is on the benefits form the eICIC and CoMP respectively. However, in the real system, eICIC and CoMP are not applicable all the time. For example, when the service amount in network is large, it needs to use RE technology to achieve transferring the service amount to pico cell. Therefore, in this case, utilizing CoMP between macro cell and pico cell may not bring any gains. When the service amount in network is small, it is not necessary to using RE to service balancing, and eICIC becomes unnecessary at this time. If the eICIC is always enabled in network, in order to eliminate the interference with pico cell, macro cell may not transmit data on particular frames. However, if there is no UE in the pico cell edge for a long time, such a configuration is clearly a waste of resources in the macro cell.

SUMMARY OF THE INVENTION

For solving the above technical problem, it needs to give full play to advantages of eICIC and CoMP for the real channel state of different UEs, achieve combination or conversion between them, so as to optimize the overall network design. The present invention now will introduce a UE-specific interference suppression mechanism.

The present invention provides a base station includes: a transceiver unit for transmitting and receiving of data with communication nodes and terminals; a location information storage unit for storing location information of the terminal in the wireless communication network; a range expanding condition information storage unit for storing range expanding condition information of respective communication node which each terminal corresponding to; and control unit for determining a service strategy for the terminals based at least on the location information of the terminal in the wireless communication network and the range expanding condition information of respective communication node which each terminal corresponding to.

In the base station, the service strategies includes Macro-RRH eICIC service strategy (803+821), RRH-RRH CoMP or RRH-Macro CoMP service strategy (815), Macro-RRH CoMP service strategy (819), Macro-RRH eICIC + RRH-RRH CoMP service strategy (803+809), and communication nodes (Macro or RRH)-specific service strategy (821).

Preferably, when the terminal is adjusted, if the corresponding frame of the macro cell is ABS frame, there is no other neighbor communication nodes (RRH) being able to perform CoMP with the communication node, and resources of the communication node are available, the control unit applies the Macro-RRH eICIC service strategy to the terminal.

Preferably, when the terminal is adjusted, if the corresponding frame of the macro cell is ABS frame, there are other neighbor communication nodes (RRH) being able to perform CoMP with the communication node, and any resources of these communication node are not occupied, the control unit applies the Macro-RRH eICIC+ RRH-RRH CoMP service strategy to the terminal.

Preferably, when the terminal is adjusted, if the corresponding frame of the macro cell is non-ABS frame, the terminal is a center user of the main serving cell, and resources of the communication node are available, the control unit applies the communication nodes (Macro or RRH)-specific service strategy to the terminal.

Preferably, when the terminal is adjusted, if the corresponding frame of the macro cell is non-ABS frame, the terminal is an edge user of the main serving cell, and the range expanding condition of the terminal is turn-on, the terminal is not allocated any resource.

Preferably, when the terminal is adjusted, if the corresponding frame of the macro cell is non-ABS frame, the terminal is a edge user of the main serving cell, the range expanding condition of the terminal is turn-off, there is no other neighbor communication nodes (RRH or macro) being able to perform CoMP with the communication node, and resources of the communication node are not occupied, the control unit applies the communication nodes (RRH)-specific service strategy to the terminal.

Preferably, when the terminal is adjusted, if the corresponding frame of the macro cell is non-ABS frame, the terminal is an edge user of the main serving cell, the range expanding condition of the terminal is turn-off, there is other neighbor communication nodes (RRH or macro) being able to perform CoMP with the communication node, and any resources of these communication node are not occupied, the control unit applies the RRH-RRH CoMP or RRH-Macro CoMP service strategy to the terminal.

Preferably, when the terminal is adjusted, if the corresponding frame of the macro cell is non-ABS frame, the terminal is an edge user of the main serving cell, the range expanding condition of the terminal is null, there is no other neighbor communication nodes (RRH) being able to perform CoMP with the communication node, and resources of the communication node are not occupied, the control unit applies the communication nodes (Macro) -specific service strategy to the terminal.

Preferably, when the terminal is adjusted, if the corresponding frame of the macro cell is non-ABS frame, the terminal is an edge user of the main serving cell, the range expanding condition of the terminal is null, there is other neighbor communication nodes (RRH) being able to perform CoMP with the communication node, and any resources of these communication node are not occupied, the control unit applies the Macro-RRH CoMP service strategy to the terminal.

Preferably, the base station further comprises: a service amount detecting unit for calculating channel quality difference between the terminal and respective communication node by reading channel quality information feedback by the terminal, and estimating location of the terminal based on the quality difference.

Preferably, the base station further comprises: a priority information storage unit for storing priority information of each terminal being scheduled, wherein, the base station schedules the each terminal based on the priority in every adjusting period.

According to the technology scheme, it is expected to give full play to advantages of eICIC and CoMP for the real channel state of different terminals, achieve combination or conversion between them, so as to optimize the overall network design.

BRIEF DESCRIPTION OF THE DRAWINGS

FIG. 1 is a diagram illustrating a typical heterogeneous network services scene of eICIC based interference cancellation mechanism.
FIG. 2 is a diagram illustrating an example of frame resource assignment based on the scene in Fig. 1.

FIG. 3 is a diagram illustrating a typical heterogeneous network services scene of CoMP based interference cancellation mechanism.

FIG. 4 is a diagram illustrating an example of frame resource assignment based on the scene in Fig. 3.

FIG. 5 is a diagram illustrating a typical heterogeneous network services scene based on user-specific interference cancellation mechanism.

FIG. 6 is a diagram of an example of base station internal structure.

FIG. 7 is a diagram illustrating a typical signaling interacting between each cell and user therein.

FIG. 8 is a flow chart of specific interference cancellation mechanism determination and resource assignment algorithm.

FIG. 9 is an example of the end user-specific frame resource assignment.

FIG. 10 is a diagram of internal structure of RRH.

DESCRIPTION OF THE INVENTION

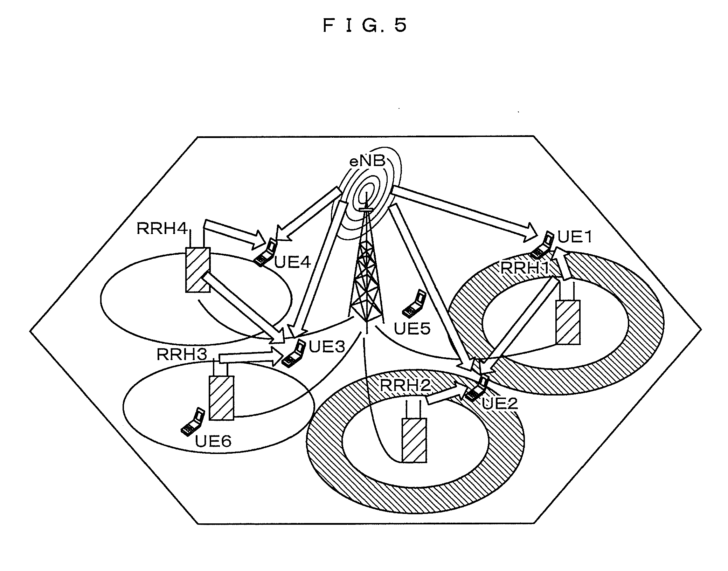

The following will describe the embodiments of the present disclosure with Fig. 5, 6, 7, 8 and 9.

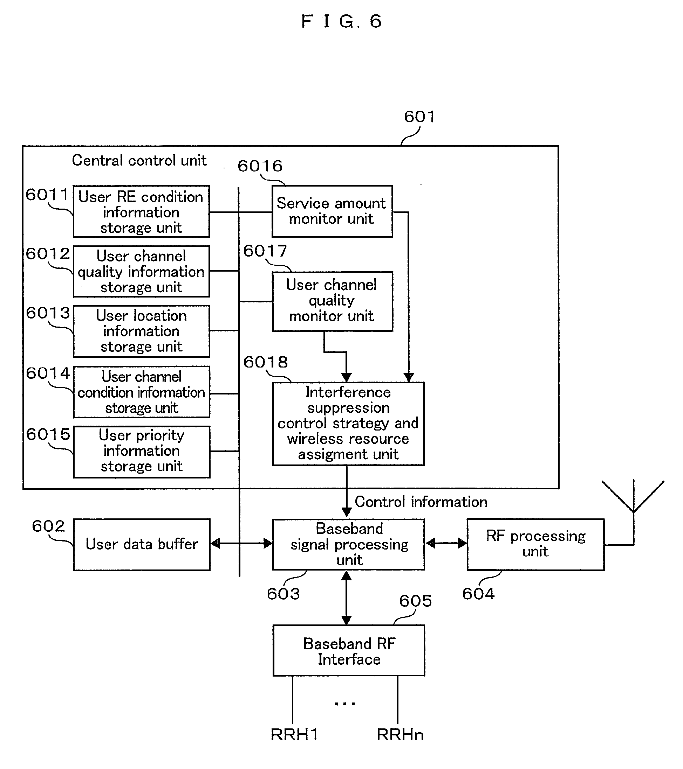

FIG. 5 is a typical heterogeneous network services scene based on UE-specific interference cancellation mechanism. In the coverage of one macro cell, 4 RRHs are distributed. The RRHs have only transmitting and receiving signals function. All the control functions are performed by the central control unit of the macro base station, see Fig. 6-601. A plurality of UEs may be distributed in the network. Therein, UE 5 is a user located at the center of the macro base station, and UE6 is a user located at the center of the RRH. For these center users, the signals received from the base station or RRH may be enough good, and the interference may be relatively small, so that such users may be served by the base station or RRH directly without eICIC or CoMP technology. However, UE 1, UE 2, UE 3 and UE 4 are the UEs located in the RHH edge, suffering a large interference. The present disclosure will describe the interference cancellation mechanism for such edge users based on this scene.

FIG. 6 is a diagram of an example of base station internal structure.

601: Central control unit of the base station. It is responsible for an algorithm of high-layer wireless resource control. Some modules and parameters relation to the present disclosure are listed therein.

6011: User RE condition information storage unit. It stores the RRH to which the user corresponds to and whether using RE operations. If the RE is enabled, the RE offset value may be set to a higher value, which the UE may make a cell selection by using this value. For the UEs in macro cell, this value is null.

| User ID | Main serving cell | RE state(on/off/null) |
|---------|-------------------|------------------------|
| UE1 | RRH 1 | on |
| UE2 | RRH 2 | on |
| UE3 | RRH 3 | off |
| UE4 | RRH 4 | off |
| . . . | . . . | . . . |
| UEn | Macro | null |

6012: User channel quality information storage unit. It stores the channel quality of the main serving cell and neighbor cell which the UE monitors. The channel quality is represented by two parameters: one is Reference Signal Received Power (RSRP). RSRP is defined as a linear average of the sum of reference signal resource blocks power. It represents the typical absolute value of the received useful signal. The other parameter is Reference Signal Received Quality (RSRQ). It is defined as a sum of the ratio of the useful received power in the transmission bandwidth to total received power ratio. It represents the relative value of signal to interference ratio.

| UE ID | Main serving cell ID/ (RSRP/ RSRQ value) | Neighbor cell ID / (RSRP/ RSRQ value) | Neighbor cell ID (RSRP/ RSRQ value) | ... | Neighbor cell ID (RSRP/ RSRQ value) |
|-------|------------------------------------------|----------------------------------------|--------------------------------------|-----|--------------------------------------|
| UE1 | RRH1/ value | Macro/ value | RRH2/ value | RRH3/ value | |
| UE2 | RRH2/ value | RRH1/ value | Macro/ value | RRH3/ value | RRH4/ value |

(continued)

| UE ID | Main serving cell ID/ (RSRP/ RSRQ value) | Neighbor cell ID / (RSRP/ RSRQ value) | Neighbor cell ID (RSRP/ RSRQ value) | ... | Neighbor cell ID (RSRP/ RSRQ value) |
|---|---|---|---|---|---|
| UE3 | RRH3/value | RRH4/value | Macro/ value | RRH2/ value | |
| UE4 | RRH4/value | Macro/ value | RRH3/value | | |
| ... | ... | ... | ... | ... | |
| UEn | Macro/ value | | | | |

6013: User location information storage unit. It stores the approximate location of each user, center user or edge user, and if it is edge user, which nodes the user located in the edge thereof.

6014: User channel condition information storage unit. It stores the CSI (channel state information) of each user. Each cell in the user monitoring set corresponds to a CSI value.

6015: User priority information storage unit. It stores the priority information of each user. Priority is calculated using the proportional fair algorithm. The specific calculation method of the priority parameter of a certain user k is $\prod_{PF}(k) = \dfrac{r_k}{\overline{R}_k}$ , wherein $r_k$ is the instant transmission rate during the scheduling time, $\overline{R}_k$ is the average transmission rate over a period of time within the window.

6016: Service amount monitor unit. This unit primarily predicts the service amount distribution by reading the wireless resource possession of each cell within macro base station coverage area. When the resource load of macro cell is higher than a threshold value, it should consider for conducting load balancing and access control. The area that macro cell user service density is more concentrated should be selected, and the RRH that has relative light load may be selected to enable the RE function, and then stores the results in the 6011.

6017: User channel quality monitor unit. It reads channel quality information on user feedback, stores it in user channel quality information storage unit 6012, and calculates the channel quality differences between this user and each of the reported N cells. If this quality differences is large, it means that this user is located at the center of main serving cell. If this quality differences is small, it means that this user is located in the edge of cell. Also, the location information of the user may be estimated according to the received (N-1) channel quality difference values. Here, N a positive integer greater than or equal to 1.

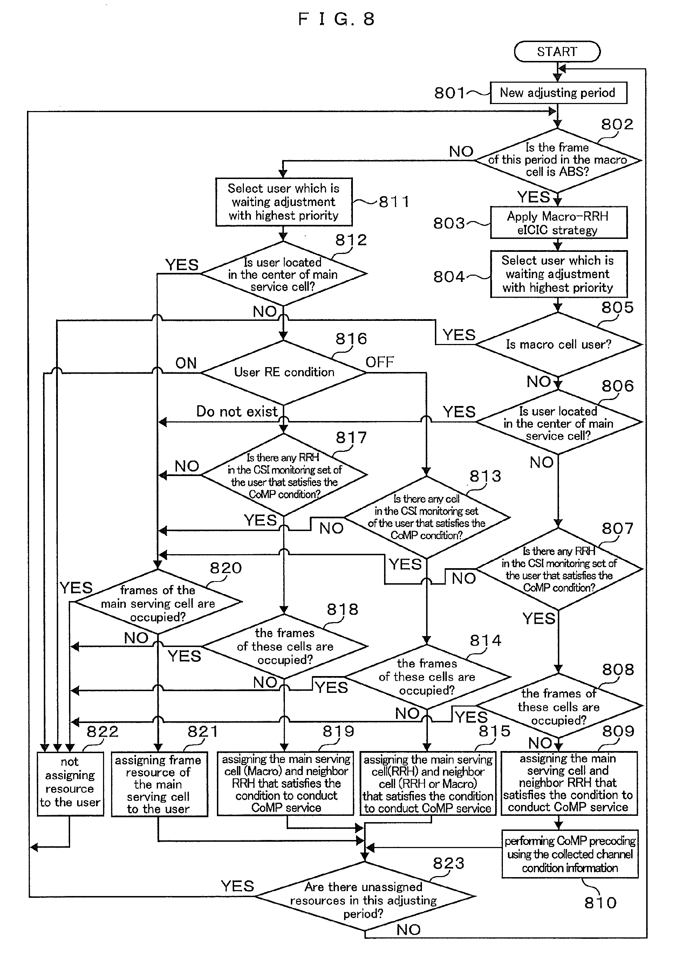

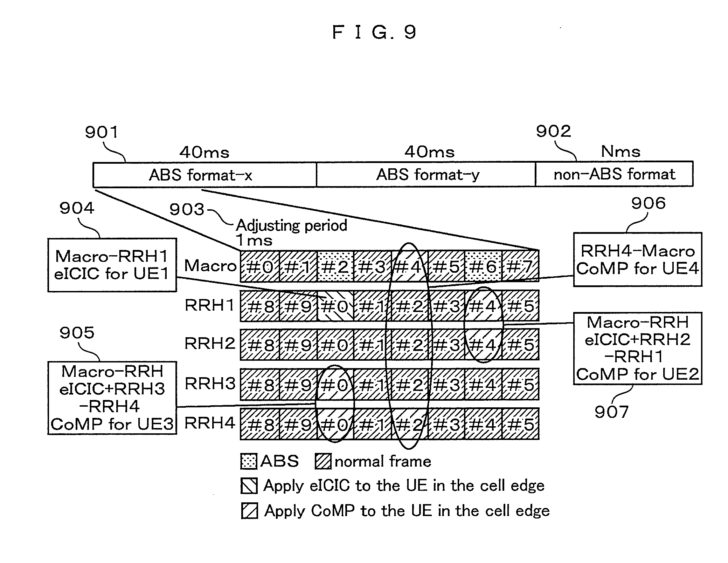

6018: Interference suppression control strategy and wireless resource assignment unit. It conducting determination and resources assignment by using the method in Fig. 8 and 9 based on the user RE state information stored in user RE state information storage unit 6011, user location information stored in user location information storage unit 6013, user channel state information stored in user channel state information storage unit 6014, and user priority information stored in user priority information storage unit 6015. The results corresponding to a certain user may be informed to baseband signal processing unit. The contents of the control information may include user ID, serving cell ID included and interference cancellation strategy, and so on.

602: User data buffer. It is used to store the user data to be transmitted.

603: Baseband signal processing unit. It performs a series of baseband processes such as modulation and coding on the received user data from user data buffer 602 and resources assignment control signaling from interference suppression control and radio resource allocation unit 6018.

In an example of resource allocation results of Fig. 9, 603 will obtain information from 6018, and schedule the edge user UE1 and UE3 at the moment of Macro eNB #2 frame. For UE1, 603 will perform interference estimation for the strategy that RRH1 serves to UE1 separately based on Macro-RRH1 eICIC. Upon performing baseband processes such as channel coding, modulation, single-cell MIMO precoding, this part of data may be send to the corresponding antenna port of RRH1 (604) by 605. RRH1 may send the data to UE1 at the moment of #0 frame. For UE3, 603 will perform interference estimation for the strategy that RRH3-RRH4 provides CoMP service to UE3 based on Macro-RRH1 eICIC. Upon performing baseband processes such as channel coding, modulation, joint (RRH3 and RRH4) precoding, this part of data may be send to the antenna corresponding ports of RRH3 and RRH4 (604) by 605. RRH3 and RRH4 will send the data to UE3 at the moment of #0 frame. To ensure the joint transmission from different transmitting nodes, each transmitting node must maintain strict synchronization.

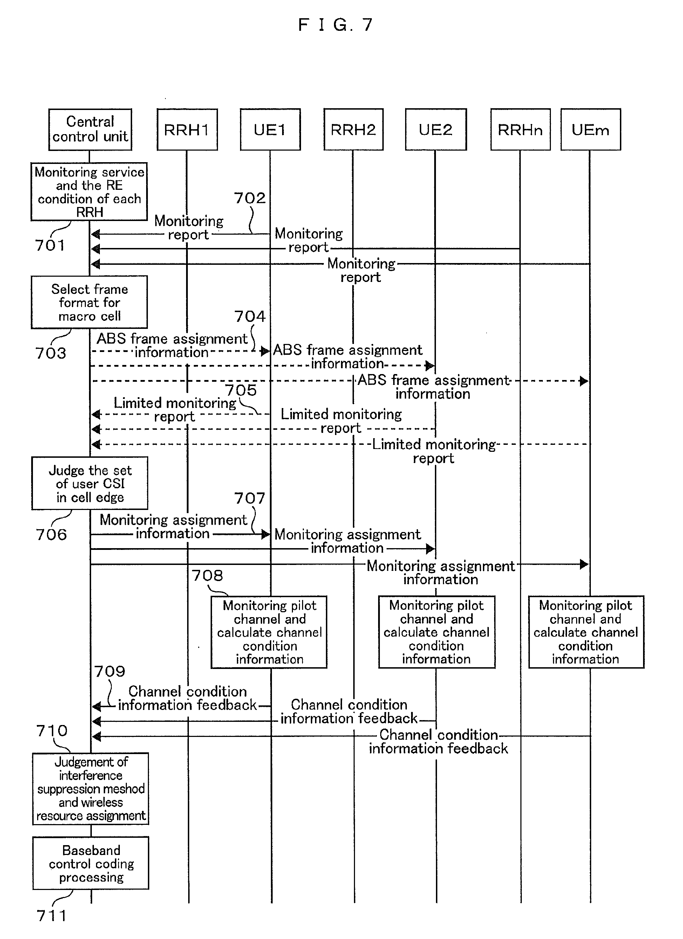

FIG. 7 is a diagram illustrating a typical signaling interacting between each cell and user therein.

701: Service amount monitor unit 6016 in central control unit 601 may monitor each network service density distribution in real time based on the transmission type and condition of all the users in network. Then, it determines whether each subordinate RRH should enable the RE function based on the level of macro cell user service amount. In the area that has a high service amount, the load may be transferred to RRH from macro cell by enabling the RE function of RRH. In the area that has a low service amount, there is no need to enable the RE function to balance the network load especially.

702: Each UE may report channel quality monitoring report message to their main serving sell. The monitoring report message may include the channel quality information of the channel between the UE and its main serving cell and neighbor cell.

RRC: The related information of IE (Information Element) in the MeasurementReport messages as follows:

| MeasResults information element | |
|---|---|
| measId | Monitoring configure ID |
| measResultPCell<br>-rsrpResult<br>-rsrqResult | Monitoring results of main cell<br>- RSRP Results<br>- RSRQ Results |
| measResultNeighCells<br>-measResultListEUTRA<br>--physCellId<br>--measResult<br>---rsrpResult<br>---rsrqResult | Monitoring results of neighbor cell<br>- Monitoring results of neighbor cell for ERTRAcell<br>--cell ID<br>-- Monitoring results<br>--- RSRP Results<br>--- RSRQ Results |

If the main serving cell of UE is a macro base station, the channel quality information may be stored directly. If the main serving cell of UE is a RRH, the channel quality information may be forwarded to the macro base station by the RRH and stored. The format of the monitoring message is that: the main serving cell ID/corresponding RSRP/RSRQ values, a plurality of neighbor cell ID/ corresponding RSRP/RSRQ values. The user channel quality monitor unit 6017 in central control unit 601 of base station may calculate the location information of users based on the channel quality information of each user and store it in user location information storage unit 6013.

703: The base station may select a frame format that has a suitable level of ABS density from predetermined frame formats based on the known information of the edge UEs (RE enabled) and all UEs. If there is no edge UE (RE enabled), the base station may send normal frame without any ABS frame formats. It is known that, in the coverage of macro cell, the primary serving cells are RRH1, RRH2, ···, RRHn, the number of edge UEs (RE enabled) in each pico cell is x1, x2, ..., xn, the number of UEs of which the main serving cell is macro cell is xm, the proportion of ABS frame in a cycle is:

$$r = \alpha \times \frac{\max\{x_1, x_2, ..., x_n\}}{x_m + \max\{x_1, x_2, ..., x_n\}}$$

wherein, $\alpha$ is a factor that is used to average the overall impact on system performance by the maximum number of pico cell edge UE $\max\{x_1, x_2, ..., x_n\}$. This factor may be generated in a number of ways, for example, it may be equal to the average number to maximum number ratio of pico cell edge UE, i.e., $\alpha = mean\{x_1, x_2, ..., x_n\}/\max\{x_1, x_2, ..., x_n\}$. After the proportion of ABS frame is determined, the frame format with corresponding level of density may be selected from the predetermined ABS frame formats.

704: The base station may configure measurement information for UEs via RRHs. This may be informed to UE over one parameter "Restrictive monitoring indication." If this indication is off, the ABS information will not be configured for UEs. Otherwise, the selected ABS frame format information will be send to UEs. The related information in MeasObjectEUTRA as follows:

| MeasObjectEUTRA information element | |
|---|---|
| MeasObject<br>-RM Indicator<br>-measSubframeCellList<br>-measSubframePattern-Neigh<br>{= MeasSubframePattern } | Monitor objects<br>- Restrictive monitoring indication (If off, the two fields followed is not existing)<br>-sending cell list of ABS Pattern<br>- ABS pattern used by each cell<br>{the format of string, each bit corresponding to a frame whether or not a ABS frame} |

705: The edge UEs may perform restrictive monitoring according to the frame format and report restrictive monitoring report. The format of monitoring report message is the same as 702.

706: The user CSI monitoring set may be calculated according to the monitoring report. For example, a threshold may be defined in advance, so that as long as the difference between the RSRP/RSRQ value of a certain neighbor cell and the RSRP/RSRQ value of the main serving cell is less than this threshold, this cell may be add to this CSI monitoring set.

707: The CSI monitoring set configuration information may be send to UE. The prior MeasObjectEUTRA IE of Re1.10 may need to be extended. A new field CSI Measurement Set Configuration may be increased, including reference symbol configuration information and feedback configuration information of all cells within the monitoring set. The specific information is following:

| MeasObjectEUTRA information element | |
|---|---|
| MeasObject | Monitor objects |
| -CSI Measurement Set Config | -CSI monitoring set configuration |
| --- measCSICellList | ---cell list in monitoring set, including each cell ID |
| --- csi-RS-Config | ---CSI-RS configuration information of each cell |
| ---cqi-ReportConfig- | --- CQI report configuration information of each cell |

708: The UEs may measure the pilot according to the monitoring configuration and calculate the channel condition information.

709: Each UE feedbacks the CSI to the respective main serving cell. The CSI information of PUCCH in the present Rel.10 may need to be extended. It should include the CSI information of each cell in the CSI monitoring set. If the main serving cell of UE is macro cell, the channel state information may be stored in 6014 directly. If the main serving cell of UE is RRH, the channel state information may be send to macro base station by the RRH and store it.

710: The central control unit of base station starts to judge the user-specific interference suppression method.

711: The central control unit of base station performs baseband processes on the user-specific data based on the particular interference suppression method.

712: The baseband signals may be sent to the corresponding nodes for transmission.

FIG. 8 is a flow chart of user-specific interference cancellation mechanism determination and resource assignment algorithm.

FIG. 9 is an example of the end user-specific frame resource assignment in the embodiments. It is mentioned in 703 of Fig. 7 that the base station may configure ABS frame format 901 with 40ms, or non-ABS format 902 without periodic limitation, and send it to UEs via RRH. Fig. 9 shows frame resource with 8ms for illustrating resource assignment. Every 1ms is the length of one frame 903, i.e., one adjusting period described in Fig. 8. Each adjusting period are assigned once by resources according to the method in Fig. 8 each time.

Service amount monitor unit 6016 in center control unit 601 may monitor each network service density distribution in real time based on the transmission type and state of all the users in network. In this example, the service amount in the vicinity of RRH1 and RRH2 is large, so the assigned RE condition of both is turn-on, and the service amount in the vicinity of RRH3 and RHH4 is small, so the assigned RE condition of both is turn-off. The central controller may inform each RRH with the RE condition, and then the RE condition may be send to the affiliated UE. In order to describe simplify and focused, the condition and resource assignment manner of users located in the center of macro cell and RRH (such as UE5 and UE6 in Fig. 5) will be omitted. These users may be assigned a null of RE state, and may be served by the cell in which it locates directly. Here, the description will focus on the interference suppression strategy for the edge user of RRH that directly related to the present invention.

| UE ID | RE condition of RRH belonged to |
|---|---|
| UE1 | On |
| UE2 | On |
| UE3 | Off |
| UE4 | Off |

The channel quality monitoring report may be sent to the respective main serving cell by UEs, and may be stored in user channel quality information storage unit 6012 in central control unit 601 of the base station. The user channel quality monitor unit 6017 in central control unit 601 of the base station may calculate the location information of users based on the channel quality information of each user and store it in user location information storage unit 6013. In this example, 4 typical edge users are founded through signal strength contrast calculation.

For example of UE2, its main serving cell is RRH2. The neighbor cells are RRH1, RRH3, RRH4 and macro cell. The signals from the main serving cell being lower than the threshold T1 means that this user is not a cell center user but locating in the edge of RRH2. The signal differences between the main serving cell and the neighbor cell RRH1, RRH3 and RRH4 are respectively D1, D2 and D3, wherein D1 is lower than the threshold T2, that means the user is located at the edge of RRH1 and is far away from RRH3 and RRH4. Since this user is accessing to RRH2, it is considered that the user is located in the edge of macro cell.

| UE ID | location |
|-------|----------|
| UE1 | Edge of RRH1 and Macro |
| UE2 | Edge of RRH1, RRH2 and Macro |
| UE3 | Edge of RRH3, RRH4 and Macro |
| UE4 | Edge of RRH4 and Macro |

The base station edge user UE1 and UE2 may select an ABS frame format. The RRH may send the ABS frame format information selected by the base station to its edge UEs, and the UEs may perform restrictive measurement according to the frame format. In this example, UE1 and UE2 can be scheduled only at the ABS frame position, so only the RSRQ and RSRP value at the ABS frame position will be monitored. UE3 and UE4 can be scheduled at the ABS frame position and non-ABS frame position. Therefore, the RSRQ and RSRP value at the ABS frame position and the RSRQ and RSRP value at the non-ABS frame position should be monitored separately.

Each UE may report restrictive monitoring reports. The central control unit may calculate the CSI monitoring set of edge users according to the monitoring reports.

| UE ID | CSI monitoring set |
|-------|--------------------|
| UE1 | {RRH1, Macro} |
| UE2 | {RRH1, RRH2, Macro} |
| UE3 | {RRH3, RRH4, Macro} |
| UE4 | {RRH4, Macro} |

The monitoring configuration information may be send to UEs. The UEs may monitor pilots according to the monitoring configuration and calculate channel condition information. Each UE may feedback the channel condition information to their main serving cell. If the main serving cell of UE is macro cell, the channel condition information may be stored in 6014 directly. If the main serving cell of UE is RRH, the channel condition information may be send to macro base station by the RRH and store it.

The interference suppression control strategy and wireless resource assignment unit 6018 in central control unit of the base station starts to determine user-specific interference suppression method. The information form 6011, 6013, 6014 and 6015 may be combined together and prioritized based on the priority of users as the following table.

| Priority value | UE ID | RE state of RRH belonged to | location | CSI |
|----------------|-------|------------------------------|----------|-----|
| P1 | UE1 | On | Edge of RRH1 and Macro | CSI of RRH1; CSI of Macro; |
| P2 | UE2 | On | Edge of RRH1, RRH2 and Macro | CSI of RRH1; CSI of RRH2; CSI of Macro; CSI (RRH1-RRH2 CoMP) |

(continued)

| Priority value | UE ID | RE state of RRH belonged to | location | CSI |
|---|---|---|---|---|
| P3 | UE3 | Off | Edge of RRH3 , RRH4 and Macro | CSI of RRH3; CSI of RRH4; CSI of Macro; CSI (RRH3-RRH4 CoMP) CSI (RRH4-Macro CoMP) CSI(RRH3-RRH4- Macro CoMP) |
| P4 | UE4 | Off | Edge of RRH4 and Macro | CSI of RRH4; CSI of Macro; CSI (RRH4-macro CoMP) |

The 6018 in central control unit of the base station starts to perform the algorism flow in Fig. 8 for determining the interference suppression method and assigning frame resource for users. It is worth to notice that, in the user adjusting, many users located at the cell center will be involved in, since they are not the object of concern, there is no further description related it, and the method for resource assignment related will be embodied in 806, 812, 820 and 821 of Fig. 8 in which their resource are assigned as occupied resource of the main serving cell. The results of the resource assignment related them are represented by the frames with dark color in Fig. 9.

Here, only a method of resource assignment for 4 typical RRH edge users will be emphasized.

In 801, a new adjusting period starts. It is assumed that it corresponds to the #2 frame of macro layer, #0 frame of RRH layer in Fig. 9. (It is assumed that the last two scheduling periods #1, #2 (two frames) are occupied by the cell center users.) Also, It is assumed that the priority order of the user from high to low is UE1, UE2, UE3 and UE4 (in which mixed with the cell center UE).

In 802, because the macro frame that this period corresponds to is an ABS frame, the users adjusted at this moment should be applied 803 Macro-RRH eICIC strategy. 804 schedules the user with the highest priority (UE1). Since UE1 is neither a macro cell user (805) nor a cell center user (806), RRH1 has no possibility to perform CoMP with other RRHs (807), and the frames of the main serving cell are not occupied (820), so the resource #0 frame of the main serving cell RHH1 is assigned to UE1 (821). The resource assignment result Macro-RRH 1 eICIC is illustrated as 904 in Fig. 9. In 823, there are unassigned resource in this adjusting period, i.e., #0 frame of RRH2, #0 frame of RRH3 and #0 frame of RRH4.

Still in this adjusting period, the highest priority user UE2 may be selected (804). Since UE2 is neither a macro cell user (805) nor a cell center user (806), RRH2 has a possible to perform CoMP with RRH1 (807), but the #0 frame of RRH1 has been occupied by UE1 at this time (808), so UE2 are not adjusted in this adjusting period (822).

Still in this scheduling period, the highest priority user UE3 may be selected (804). Since UE3 is neither a macro cell user (805) nor a cell center user (806), RRH3 may be able to perform CoMP with RRH4 (807), and the #0 frame of RRH3 and #0 frame of RRH4 are not occupied (808), so UE3 may be applied the CoMP strategy of RRH3- RRH4 finally (809). Since the ABS frame of the macro cell corresponds to, that means the default strategy between the macro cell and RRH is eICIC. The integrated resource assignment result is Macro-RRH eICIC+ RRH3-RRH4 CoMP, shown as 905 in Fig. 9.

The process adjusting the other cell center UE continues until there is no resource assignable in that adjusting period (823). Then turn to the next adjusting period.

In 801, a new adjusting period that corresponds to #3 frame of macro layer and #1 frame of RRH layer starts. The user priority list may be reordered as UE2, UE4, UE1, UE3 (in which mixed with the cell center UE). It is assumed that the cell center users with the highest priority are adjusted in this period until the resource is fully occupied.

In 801, a new adjusting period that corresponds to #4 frame of macro layer and #2 frame of RRH layer starts. The macro cell frame is non-ABS frames at the moment (802). The user priority list may be reordered. It is assumed that the order now is UE2, UE4, UE1, UE3 (in which mixed with the cell center UE). The user with the highest priority (UE2) is selected (811). This user is an edge user of the main serving cell (812), its RE condition is turn-on (816), and this user may not be assigned any resource in this frame (822).

Still in this adjusting period, the highest priority user UE4 may be selected (811). This user is an edge user of the main serving cell (812), its RE condition is turn-off (816), RRH4 may be able to perform CoMP with the macro, #2 frame of RRH4 and #4 frame of macro are not occupied, thus assigning RRH4-Macro CoMP (815), the result is shown as 906 in Fig. 9.

The process adjusting the other cell center UE continues until there is no resource assignable in that adjusting period (823). Then turn to the next adjusting period.

In 801, a new adjusting period that corresponds to #5 frame of macro layer and #3 frame of RRH layer starts. The user priority list may be reordered as UE2, UE1, UE3, UE4 (in which mixed with the cell center UE). It is assumed that the cell center users with the highest priority are adjusted in this period until the resource is fully occupied.

In 801, a new adjusting period that corresponds to #6 frame of macro layer and #4 frame of RRH layer starts. The user priority list may be reordered as UE2, UE1, UE3, UE4 (in which mixed with the cell center UE). The user UE2 is scheduled. In 802, because the macro frame that 802 correspond to the adjusting period is an ABS frame, the users adjusted at this moment should be applied 803 Macro-RRH eICIC strategy. 804 schedules the user with the highest priority UE2 (804). Since UE2 is not a center user of main serving cell (806), the RRH1 in the CSI monitoring set of this user may be able to perform CoMP, the RRH2-RRH1 CoMP strategy may be assigned. The resource assignment result integrated with 803 is Macro-RRH eICIC+ RRH2-RRH1 CoMP, shown as 907 in Fig. 9.

Finally, the final interference suppression strategy for 4 typical edge users in this embodiment is shown as the following table. The resource assignment result is shown as Fig.9.

| User ID | final interference suppression strategy |
|---------|------------------------------------------|
| UE1 | Macro-RRH1 eICIC |
| UE2 | Macro-RRH eICIC + RRH2-RRH1 CoMP |
| UE3 | Macro-RRH CoMP + RRH3-RRH4 CoMP |
| UE4 | RRH4-Macro CoMP |

## Claims

1.  A base station for wireless communication network, comprising:

    transceiver unit for transmitting and receiving of data with communication nodes and terminals;
    location information storage unit for storing location information of the terminal in the wireless communication network;
    range expanding condition information storage unit for storing range expanding condition information of respective communication node which each terminal corresponding to; and
    control unit for determining a service strategy for the terminals based at least on the location information of the terminal in the wireless communication network and the range expanding condition information of respective communication node which each terminal corresponding to.

2.  The base station according to claim 1, wherein,
    the service strategy is any one of Macro-RRH eICIC service strategy (803+821), RRH-RRH CoMP or RRH-Macro CoMP service strategy (815), Macro-RRH CoMP service strategy (819), Macro-RRH eICIC + RRH-RRH CoMP service strategy (803+809), and communication node (Macro or RRH) -specific service strategy (821).

3.  The base station according to claim 2, wherein,
    when the terminal is adjusted, if the corresponding frame of the macro cell is ABS frame, there is no other neighbor communication nodes (RRH) being able to perform CoMP with the communication node, and resources of the communication node are not occupied, the control unit applies the Macro-RRH eICIC service strategy to the terminal.

4.  The base station according to claim 2, wherein,
    when the terminal is adjusted, if the corresponding frame of the macro cell is ABS frame, there are other neighbor communication nodes (RRH) being able to perform CoMP with the communication node, and any resources of these communication node are not occupied, the control unit applies the Macro-RRH eICIC+ RRH-RRH CoMP service strategy to the terminal.

5.  The base station according to claim 2, wherein,
    when the terminal is adjusted, if the corresponding frame of the macro cell is non-ABS frame, the terminal is a center user of the main serving cell, and resources of the communication node are not occupied,, the control unit applies the communication nodes (Macro or RRH) -specific service strategy to the terminal.

**6.** The base station according to claim 2, wherein,
when the terminal is adjusted, if the corresponding frame of the macro cell is non-ABS frame, the terminal is a edge user of the main serving cell, and the range expanding condition of the terminal is turn-on, the terminal is not allocated any resource.

**7.** The base station according to claim 2, wherein,
when the terminal is adjusted, if the corresponding frame of the macro cell is non-ABS frame, the terminal is a edge user of the main serving cell, the range expanding condition of the terminal is turn-off, there is no other neighbor communication nodes (RRH or macro) being able to perform CoMP with the communication node, and resources of the communication node are not occupied, the control unit applies the communication nodes (RRH)-specific service strategy to the terminal.

**8.** The base station according to claim 2, wherein,
when the terminal is adjusted, if the corresponding frame of the macro cell is non-ABS frame, the terminal is a edge user of the main serving cell, the range expanding condition of the terminal is turn-off, there is other neighbor communication nodes (RRH or macro) being able to perform CoMP with the communication node, and any resources of these communication node are not occupied, the control unit applies the RRH-RRH CoMP or RRH-Macro CoMP service strategy to the terminal.

**9.** The base station according to claim 2, wherein,
when the terminal is adjusted, if the corresponding frame of the macro cell is non-ABS frame, the terminal is a edge user of the main serving cell, the range expanding condition of the terminal is null, there is no other neighbor communication nodes (RRH) being able to perform CoMP with the communication node, and resources of the communication node are not occupied, the control unit applies the communication nodes (Macro) -specific service strategy to the terminal.

**10.** The base station according to claim 2, wherein,
when the terminal is adjusted, if the corresponding frame of the macro cell is non-ABS frame, the terminal is a edge user of the main serving cell, the range expanding condition of the terminal is null, there is other neighbor communication nodes (RRH) being able to perform CoMP with the communication node, and any resources of these communication node are not occupied, the control unit applies the Macro-RRH CoMP service strategy to the terminal.

**11.** The base station according to claim 1, further comprising:

service amount detecting unit for calculating channel quality difference between the terminal and respective communication node by reading channel quality information feedback by the terminal, and estimating location of the terminal based on the quality difference.

**12.** The base station according to claim 1, further comprising:

priority information storage unit for storing priority information of each terminal being scheduled,
wherein, the base station schedules the each terminal based on the priority in every adjusting period.

**13.** A method for controlling base station, the base station comprising:

transceiver unit for transmitting and receiving of data with communication nodes and terminals;
location information storage unit for storing location information of the terminal in the wireless communication network;
range expanding condition information storage unit for storing range expanding condition information of respective communication node which each terminal corresponding to; and
control unit for determining a service strategy for the terminals based at least on the location information of the terminal in the wireless communication network and the range expanding condition information of respective communication node which each terminal corresponding to;
wherein, the method for controlling base station comprising:

when the terminal is scheduled, the control unit determining a service strategy for the terminal based on whether the corresponding frame of the macro cell is ABS frame, whether there is other neighbor communication nodes (RRH) being able to perform CoMP with the communication node, whether resources of the communication node are occupied, whether the terminal is a center user or a edge user of the main serving cell, and the range expanding condition of the terminal.

14. The method according to claim 13, wherein the service strategy is any one of Macro-RRH eICIC service strategy (803+821), RRH-RRH CoMP or RRH-Macro CoMP service strategy (815), Macro-RRH CoMP service strategy (819), Macro-RRH eICIC + RRH-RRH CoMP service strategy (803+809), and communication nodes (Macro or RRH) -specific service strategy (821).

15. The method according to claim 13, wherein,
when the terminal is adjusted, if the corresponding frame of the macro cell is ABS frame, there is no other neighbor communication nodes (RRH) being able to perform CoMP with the communication node, and resources of the communication node are not occupied, the control unit applies the Macro-RRH eICIC service strategy to the terminal.

16. The method according to claim 14, wherein,
when the terminal is adjusted, if the corresponding frame of the macro cell is ABS frame, there are other neighbor communication nodes (RRH) being able to perform CoMP with the communication node, and any resources of these communication node are not occupied, the control unit applies the Macro-RRH eICIC+ RRH-RRH CoMP service strategy to the terminal.

17. The method according to claim 14, wherein,
when the terminal is adjusted, if the corresponding frame of the macro cell is non-ABS frame, the terminal is a center user of the main serving cell, and resources of the communication node are not occupied,, the control unit applies the communication nodes (Macro or RRH) -specific service strategy to the terminal.

18. The method according to claim 14, wherein,
when the terminal is adjusted, if the corresponding frame of the macro cell is non-ABS frame, the terminal is a edge user of the main serving cell, and the range expanding condition of the terminal is turn-on, the terminal is not allocated any resource.

19. The method according to claim 14, wherein,
when the terminal is adjusted, if the corresponding frame of the macro cell is non-ABS frame, the terminal is a edge user of the main serving cell, the range expanding condition of the terminal is turn-off, there is no other neighbor communication nodes (RRH or macro) being able to perform CoMP with the communication node, and resources of the communication node are not occupied, the control unit applies the communication nodes (RRH)-specific service strategy to the terminal.

20. The method according to claim 14, wherein,
when the terminal is adjusted, if the corresponding frame of the macro cell is non-ABS frame, the terminal is a edge user of the main serving cell, the range expanding condition of the terminal is turn-off, there is other neighbor communication nodes (RRH or macro) being able to perform CoMP with the communication node, and any resources of these communication node are not occupied, the control unit applies the RRH-RRH CoMP or RRH-Macro CoMP service strategy to the terminal.

21. The method according to claim 14, wherein,
when the terminal is adjusted, if the corresponding frame of the macro cell is non-ABS frame, the terminal is a edge user of the main serving cell, the range expanding condition of the terminal is null, there is no other neighbor communication nodes (RRH) being able to perform CoMP with the communication node, and resources of the communication node are not occupied, the control unit applies the communication nodes (Macro)-specific service strategy to the terminal.

22. The method according to claim 14, wherein,
when the terminal is adjusted, if the corresponding frame of the macro cell is non-ABS frame, the terminal is a edge user of the main serving cell, the range expanding condition of the terminal is null, there is other neighbor communication nodes (RRH) being able to perform CoMP with the communication node, and any resources of these communication node are not occupied, the control unit applies the Macro-RRH CoMP service strategy to the terminal.

F I G. 1

F I G. 2

F I G. 3

# F I G. 4

| Macro | #0 | #1 | #2 | #3 | #4 | #5 | #6 | #7 | #8 | #9 |
| RRH | #8 | #9 | #0 | #1 | #2 | #3 | #4 | #5 | #6 | #7 |

▨ Normal frame   ▧ Apply CoMP for UE in the cell edge

F I G. 5

F I G. 6

601

Central control unit    6016

6011  User RE condition
      information
      storage unit

6012  User channel
      quality information
      storage unit

6013  User location
      information
      storage unit

6014  User channel
      condition information
      storage unit

6015  User priority
      information
      storage unit

6016  Service amount
      monitor unit

6017  User channel
      quality
      monitor unit

6018  Interference
      suppression
      control strategy and
      wireless resource
      assigment unit

Control information

602   User data buffer

Baseband
signal processing
unit

603

RF processing
unit

604

605   Baseband RF
      Interface

RRH1        ...        RRHn

# F I G. 7

# F I G. 8

# FIG. 9

901          40ms                    40ms              Nms      902

| ABS format-x | ABS format-y | non-ABS format |

904                903

Adjusting period
1ms

| Macro-RRH1 eICIC for UE1 | | Macro | #0 | #1 | #2 | #3 | #4 | #5 | #6 | #7 | | RRH4-Macro CoMP for UE4 |

906

RRH1 | #8 | #9 | #0 | #1 | #2 | #3 | #4 | #5

905

| Macro-RRH eICIC+RRH3 -RRH4 CoMP for UE3 |

RRH2 | #8 | #9 | #0 | #1 | #2 | #3 | #4 | #5

RRH3 | #8 | #9 | #0 | #1 | #2 | #3 | #4 | #5

RRH4 | #8 | #9 | #0 | #1 | #2 | #3 | #4 | #5

Macro-RRH eICIC+RRH2 -RRH1 CoMP for UE2

907

▦ ABS   ▧ normal frame

◩ Apply eICIC to the UE in the cell edge

◪ Apply CoMP to the UE in the cell edge

EP 2 744 254 A1

EP 2 744 254 A1

F I G . 1 0

# INTERNATIONAL SEARCH REPORT

International application No.

PCT/CN2012/079152

**A. CLASSIFICATION OF SUBJECT MATTER**

see the extra sheet

According to International Patent Classification (IPC) or to both national classification and IPC

**B. FIELDS SEARCHED**

Minimum documentation searched (classification system followed by classification symbols)

IPC: H04W; H04Q; H04L; H04B

Documentation searched other than minimum documentation to the extent that such documents are included in the fields searched

Electronic data base consulted during the international search (name of data base and, where practicable, search terms used)

CNABS, CNTXT, VEN, 3GPP, IEEE, CNKI: CoMP; +ICIC; multipoint; coordinat+; interfere+; range; expansion; CRE; position

**C. DOCUMENTS CONSIDERED TO BE RELEVANT**

| Category* | Citation of document, with indication, where appropriate, of the relevant passages | Relevant to claim No. |
|---|---|---|
| X | CN101132601A(UNIV BEIJING POSTS & TELECOM) 27 Feb. 2008(27.02.2008) claim 4; the description, page 3, lines 11-14, page 6, line14-page 7, line 14, page 8, lines 7-18, figures 2-4 | 1,2,12 |
| Y | | 11 |
| Y | CN101931439A(ZTE CORP) 29 Dec. 2010(29.12.2010) the description, paragraph [0021]-paragraph [0026], line 2 | 11 |
| X | CN101483873A(UNIV XIDIAN) 15 Jul. 2009(15.07.2009) claim 1; the description, page 2, lines 1-15, page 6, lines 6-19 | 1,2,12 |
| Y | | 11 |
| A | NTT DOCOMO. Views on eICIC Schemes for Rel-10. R1-105724. 3GPP TSG RAN WG1 Meeting #62bis. 15 Oct. 2010    pages 1-9 | 1-22 |
| A | US2008247340A1(SAMSUNG ELECTRONICS CO LTD) 09 Oct. 2008(09.10.2008) the whole document | 1-22 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 Sept. 2012(10.09.2012) | 04 Oct.2012(04.10.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>DU, Yongyan<br><br>Telephone No. (86-10)62412275 |
|---|---|

Form PCT/ISA /210 (second sheet) (July 2009)

## INTERNATIONAL SEARCH REPORT
### Information on patent family members

International application No.

PCT/CN2012/079152

| Patent Documents referred in the Report | Publication Date | Patent Family | Publication Date |
|---|---|---|---|
| CN101132601A | 27.02.2008 | CN100548071C | 07.10.2009 |
| CN101931439A | 29.12.2010 | WO2010148612A1 | 29.12.2010 |
| CN101483873A | 15.07.2009 | CN101483873B | 08.09.2010 |
|  |  | WO2010072019A1 | 01.07.2010 |
| US2008247340A1 | 09.10.2008 | KR1042790B1 | 20.06.2011 |
|  |  | KR20080090731A | 09.10.2008 |

Form PCT/ISA /210 (patent family annex) (July 2009)

## INTERNATIONAL SEARCH REPORT

International application No.

PCT/CN2012/079152

Continuation of: CLASSIFICATION OF SUBJECT MATTER

H04W 16/02 (2009.01) i

H04B 1/12 (2006.01) i

H04B 7/005 (2006.01) i

H04B 7/14 (2006.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110230920

- CN 201210049969